# EUROPEAN PATENT SPECIFICATION

(11) **EP 2 665 585 B1**
(45) Date of publication and mention of the grant of the patent: **22.10.2014**
(21) Application number: 11703819.0
(22) Date of filing: 21.01.2011
(51) Int. Cl.: B25J 9/16, G05B 19/05

(54) **SYSTEM FOR COMMANDING A ROBOT**
SYSTEM ZUR STEUERUNG EINES ROBOTERS
SYSTÈME POUR COMMANDER UN ROBOT

(43) Date of publication of application: 27.11.2013
(73) Proprietor: ABB AG, 68309 Mannheim (DE)
(72) Inventor: BECKER, Oliver, 69198 Schriesheim (DE); RÜDELE, Hartmut, 68526 Ladenburg (DE); DAI, Fan, 64673 Zwingenberg (DE)
(86) International application number: PCT/EP2011/000243
(87) International publication number: WO 2012/097834

(56) References cited:
- US-A1- 2010 063 608
- AIDA T ET AL: "Position-control module for MICREX-SX series", FUJI ELECTRIC REVIEW , vol. 45, no. 1 1 January 1999 (1999-01-01), pages 20-24, XP008156854, ISSN: 0429-8284 Retrieved from the Internet: URL:http://www.fujielectric.com/company/te ch_archives/pdf/45-01/FER-45-01-020-1999.p df [retrieved on 2012-09-28]
- MARCELLO BONFE ET AL: "PLC-based control of a robot manipulator with closed kinematic chain", ROBOTICS AND AUTOMATION, 2009. ICRA '09. IEEE INTERNATIONAL CONFERENCE ON, IEEE, PISCATAWAY, NJ, USA, 12 May 2009 (2009-05-12), pages 1262-1267, XP031509515, ISBN: 978-1-4244-2788-8
- "PLCS SUIT UP FOR ROBOT CONTROL", MACHINE DESIGN, PENTON MEDIA, CLEVELAND, OH, US, vol. 67, no. 8, 20 April 1995 (1995-04-20) , page 160,162, XP000508346, ISSN: 0024-9114
- BOCZKAJ B F ED: "SOFTWARE ASPECTS OF PLCS APPLICATION IN ROBOTIC WORKCELLS", IAS '96. CONFERENCE RECORD OF THE 1996 IEEE INDUSTRY APPLICATIONS CONFERENCE 31ST. IAS ANNUAL MEETING. SAN DIEGO,CA, OCT. 6 - 10, 1996; NEW YORK, IEEE, US, vol. MEETING 31, 6 October 1996 (1996-10-06), pages 1575-1581, XP000696300, DOI: 10.1109/IAS.1996.559277 ISBN: 978-0-7803-3545-5

## Description

The invention relates to a system for commanding a robot by a programmable logic controller and a belonging method for commanding a robot.

It is known, that robots are widely used in industrial applications, such as material handling, machine tending, assembly of parts, arc welding or painting of vehicles. Furthermore handling tasks like pick-and place or palletizing applications are typically realizable by a robot. Usually, several robots are working together along a common production line, whereas each robot is foreseen for a certain production step. The overall control of those robots is typically realized by a system, which is based on a programmable logic controller (PLC). The programmable logic controller coordinates the triggering of the working sequences of the different robots dependent for example on the position of a conveyor system, wherewith a workpiece to be assembled is transported along the different working positions of the robots. The programming of a PLC is standardized in a wider manner, for example by IEC 61131, so a person who is skilled in PLC programming is able to operate a wide range of different PLC controlled production lines concerning this issue.

A robot comprises normally a robot manipulator with several degrees of freedom in movement, for example six or seven, whereas at the end of the robot manipulator typically an end effector like a gripper or another tool like a welding gun is foreseen. A robot manipulator with at least six degrees of freedom in movement is able to position a belonging tool within each coordinate of its working range in each orientation. Thus, a coordinate along a movement path of the robot tool requires typically six val-ues, three for the belonging coordinate and three for the belonging orientation. The working range of a robot depends on the robot and might be for example within a radius of 1 m to 3m around the belonging robot base.

The movement of the robot is typically controlled by a dedicated robot controller, which comprises on the one side a kind of computer system and on the other side several amplifiers for the belonging drives of the robot. Typically each degree of freedom in movement requires a dedicated drive such as an electrical motor. The desired movement of the robot is normally contained within a robot program, which is stored on the computer system of the robot controller. The movement path is composed by a sequence of movement sections inbetween given coordinates, which are specified within the robot program. Thus a robot program might contain commands with the content "linear move from current coordinate to coordinate [x1, x2, x3, 01, o2, o3] with speed [z]" or "linear move from current coordinate to current coordinate + delta [xl, x2, x3, 01, o2, o3J with speed (zj'. Additionally a robot program typically comprises configuration data of the robot, such as the information about axis limits or mounted equipment. The robot controller calculates the belonging control signals for the different motors, so that the tip of the robot manipulator executes the desired motion. It is also thinkable, that two or more robots are controlled by a common robot controller.

Thus, the programming of a robot is a rather time consuming task and requires special knowledge. Since each robot manufacturer typically provides a different programming language for his robots, the programming effort also increases if different kinds of robots are installed within the same production line of a manufacturing plant.

Disadvantageously within this state of the art is, that the operation of such a production line requires at least two different control systems, on the one side the PLC system for the overall control and on the other sides the control systems for the robots of the different manufacturers, which all have to be operated by the same operating staff of the production line.

The document T. AIDA et. al. "Positioning-control module for MICREX-SX series", Fuji Electric Review, vol. 45, no. 1, pages 20-24 (1 January 1999) discloses a position-control-module for a "MICREX-SX series" PLC. Here function blocks of the PLC correspond to robot commands respectively sections of a movement path of a robot.

Based on this state of the art it is the objective of the invention to provide a system for controlling or commanding a robot, which requires less effort during programming, commissioning or operating.

This problem is solved by a system for commanding a robot by a programmable logic controller of the aforementioned kind. The system is comprising at least two function blocks with at least one input for triggering an execution of a belonging PLC function and at least one output indicating the status of the belonging function block, whereas each function block is representing a movement segment of a movement path of the robot to be commanded and a robot controller interface which orchestrates the function blocks currently in execution into a robot command. The function blocks are linked sequentially, so that the execution of a subsequent function block is triggered by the output of the proceeding function block. The orchestrated robot commands are applicable to a robot controller and the robot controller interface of the PLC is prepared to receive a feedback signal of the robot controller, which influences the output status of the belonging function block.

The basic idea of the invention consists in using the PLC functionality of a programmable logic controller for commanding a robot itself. Thus the different motion commands for the robot are sent sequentially to the robot controller by using a belonging dedicated PLC function block. Each PLC function block is programmable with a standard PLC user interface, and each PLC function block corresponds to a certain robot command, such as correspondingly "*move from current position* to *coordinate [x1, x2, x3,* o*1,* o*2*, o*3*]" or "*perform a circular movement with radius [z] around coordinate [v1, v2, v3]*" or such. The desired function is selectable from a list of available types of function blocks, whereas the parameters have to become specified during the PLC programming. Thus, the whole desired movement path is available in a sequence of PLC functions. Of course such a sequence of PLC functions has not necessarily to become edited online - moreover it might be imported into the programmable logic controller from extern, for example from a data table or file.

The commanding of the robot by the programmable logic controller consists in promptly and sequentially providing robot commands to the robot controller, which afterwards have to be executed. Thus the function blocks of the programmable logic controller have to be executed in exact the same sequence that corresponds to the sequence of movement segments of the desired movement path of the robot. According to the invention each function block is triggered or executed, if a belonging signal is provided to the belonging input. The first function block is triggered separately, for example by a start signal, whereas each subsequent function block is triggered by the output of the proceeding function block.

To translate this sequence of currently executed function blocks into a sequence of robot commands, which are executable by the robot controller, each function block currently in execution is orchestrated by a robot controller interface into a belonging robot command. Those orchestrated robot commands are applicable to the robot controller, so that they can be executed.

According to the invention it is foreseen, that the actual status of the currently executed robot command is send back to the controller interface, so that the output status of the belonging function block is actualized correspondingly. This information is important for triggering the subsequent function block. Otherwise it would be possible, that each subsequent function block is executed immediately after the proceeding function block has been started, so that the execution of the function blocks is not more or less synchronously to the execution of the robot movement. Thus a control of the robot movement by using a programmable logic controller is enabled, which is independent on the programming language of the robot and takes advantage of the widely standardized PLC functions in an advantageous way.

In a variant of the invention the at least one output of a function block encodes at least three states, namely a first state, which indicates, that the function block has been activated, a second state, which indicates that the robot has started the corresponding motion, a third state, which indicates, that the robot has finished the corresponding motion. This enables in an advantageous way the control of the conditions, at what time a subsequent command is sent to the robot controller and how long the stack of commands to be executed by the robot respectively the robot controller is.

According to a further variant of the invention a subsequent function block is triggered by an output of the proceeding function block which encodes the first state, namely that the belonging function block has been activated. Thus the subsequent command is provided in advance to the robot controller immediately after the proceeding function block has been started to become executed. Thus the robot immediately starts executing the subsequent command after finishing the proceeding command without any interruption. With this method, it is possible to provide a larger number of robot commands in advance, enabling a smooth robot motion, since the look-ahead algorithm of the robot might need several commands in advance. Dependent on the desired robot movement this might be a preferred solution.

According to another variant of the invention it is also foreseen that at least one subsequent function block is triggered by an output of a proceeding block, which encodes the second state, namely that the robot has started the belonging motion. With this method, it is possible to provide exactly one robot command in advance. Dependent on the desired robot movement this might be a preferred solution.

Following a further variant of the invention it is foreseen, that at least one subsequent function block is triggered by the output of a proceeding function block encoding the third state, namely that the robot has finished the corresponding motion of the proceeding block. According to this method no robot command is provided in advance. Thus the robot will perform a motion stop inbetween those consecutive commands, waiting for the next command. Dependent on the desired robot movement this might be a preferred solution.

In a further embodiment of the invention at least one function block is realized by a belonging software function on a data processing device. Such a data processing device could be for example an already existing computer for the control of a production line. Thus the effort for additional hardware can be reduced in an advantageous way by implementing functionalities of the system according to the invention into existing hardware.

But on the other side it is also thinkable, to realize a function block by a belonging hardware module. This variant enables a very fast execution of the belonging function. Using a larger number of identical hardware modules for the realization of a larger number of function blocks will reduce the effort for realizing such a system in an advantageous way, whereas the system is also easily to enlarge, if required.

In a further embodiment, the function blocks can be executed on the same hardware like the robot controller software. Thus no additional hardware is required for implementing the PLC functionality.

In a preferred form of the invention the robot controller comprises a motion queue, which is foreseen to store the orchestrated robot commands in. This is useful especially for those variants of the invention, where it is foreseen to trigger a subsequent function block by an output of a proceeding function block, which encodes the first or second state. In those cases robot commands are provided in advance before they can become executed by the robot controller. Thus a stack for the commands is required, which is realizable by such a motion queue in an advantageous way.

According to a further variant of the invention it is foreseen to eliminate those orchestrated robot commands from the motion queue, which have been already executed by the robot. Those commands have no further impact for the further proceeding, after sending the information to the robot controller interface, that they have been executed.

The problem is also solved by a method for commanding a robot using a system according to the invention, comprising the following steps:
- Initiating the execution of the first function block on the PLC,
- Orchestrating the robot command assigned to the first function block into the motion queue of the robot controller,
- Initiating the execution of subsequent function blocks by an output of the belonging proceeding block,
- Orchestrating the robot commands assigned to each subsequent function block into the motion queue of the robot controller,
- Executing the commands stored in the motion queue of the robot controller,
- Providing status data of the execution of the belonging movement segments to at least the belonging function block,
- Updating the output of at least one function block according to the provided status data.

The advantages of this method have already been described correspondingly for the belonging system.

Further advantageous embodiments of the invention are mentioned in the dependent claims.

The invention will now be further explained by means of an exemplary embodiment and with reference to the accompanying drawings, in which:
- Figure 1: shows an exemplary function block of a programmable logic controller (PLC),
- Figure 2: shows an exemplary system for commanding a robot by PLC and
- Figure 3: shows an exemplary robot with movement path.

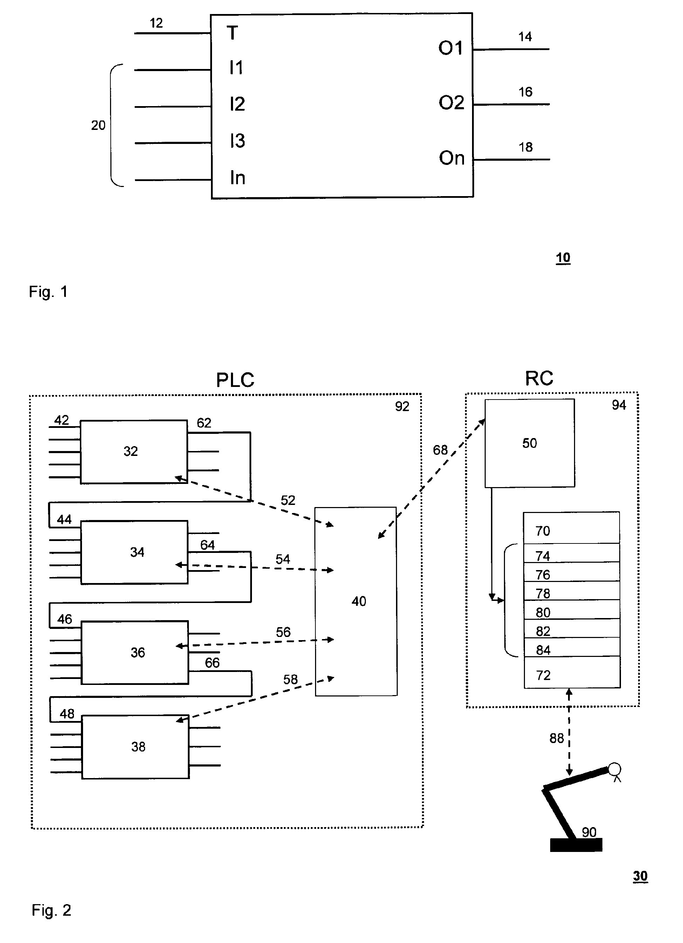

Figure 1 shows a function block 10, comprising an input 12 (in the Fig. referenced with "T") for triggering the execution of a belonging function, further inputs 20 (in the Fig. referenced with "I1", "I2", "I3", "n") and three outputs 14, 16, 18 (in the Fig. referenced with "O1", "O2", "O3"). The function block describes a functional relationship between the inputs 20 and the outputs 14, 16, 18, which all are foreseen to encode either the status TRUE ort FALSE. The first output 14 represents the first state, namely that the function block has been activated, the second output 16 represents the second state, namely that the execution of the belonging movement segment has been started whereas the third output represents the third state, namely that the execution of the belonging movement segment has been finished. Such a function block is as well realizable as software function as with a dedicated hardware.

Figure 2 shows an exemplary system 30 for commanding a robot by PLC. The programmable logic controller 92 comprises four exemplary function blocks 32, 34, 36, 38 which are sequentially connected. The execution of the first function block 32 can be triggered by its input 42, for example by an external manual signal. The first output 62 of the function block is connected to the trigger input 44 of the subsequent function block 34. The first output 62 indicates in its TRUE state, that the execution of the function block 32 has been started. Thus the subsequent third function block 34 is executed immediately after starting the proceeding block 32. So the belonging robot commands are orchestrated rather simultaneously by the robot controller interface 40 into real robot commands. Both orchestrated commands are applied to the robot controller 94, which also comprises a motion queue for sequentially storing the orchestrated robot commands. A data connection line 68 is foreseen inbetween PLC 92 and robot controller 94, typically a fieldbus. The motion queue can either be part of the robot controller 94 itself, but it can also be integrated into an optional PLC interface 50, which is foreseen to coordinate the communication with the programma-ble logic controller 92.

The robot controller 94 comprises a computing device with the ability to store and execute a robot movement program. The robot movement program comprises a first 70 and a second 72 frame part, which frames a part of the robot program comprising motion command. In this case the orchestrated motion commands 74, 76, 78, 80, 82, 84 are sequentially integrated into the executable robot program, so that the robot 90 executes sequentially those commands.

Since the commands corresponding to the second 32 and third 34 function blocks are applied rather simultaneously to the robot controller 94, the motion queue has the second command as backlog, while the first command is executed by the robot 90. Thus the robot 90 does not interrupt motion inbetween the execution of both movement segments.

A forth function block 36 is triggered with its trigger input 46 by the second output 64 of the third movement block 34. The second output 64 encodes the second state, namely that the execution of the belonging movement segment has been started. Thus the robot command corresponding to the forth function block 36 is orchestrated into the motion queue after the robot 90 has started the execution of the movement segment corresponding to the third *function* block 34. The information that the execution has already been started has been provided by the communication line 68 from the robot controller 94 to the PLC 92 in the meanwhile:

A fifth function block 38 is triggered with its trigger input 48 by the third output 66 of the forth function block 36. The third output 66 encodes the third state, namely that the execution of the movement segment corresponding to the forth movement block 36 has been finished. Thus the belonging robot command is not orchestrated into the motion queue until all previous commands within the motion queue have been executed by the robot 90. Therefore the robot motion will stop inbetween the execution of the last robot command. In this case the data communication lines 52, 54, 56, 58 are assumed to be realized by a pure data exchange within the programmable logic controller 92, for example by variables. If the programmable logic controller would have been realized by a dedicated physical hardware and not by a software module, those data communication lines would be real physically existing lines.

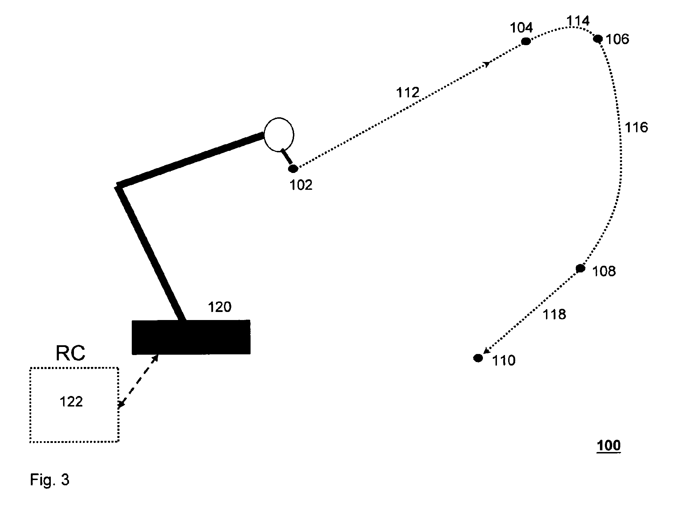

Figure 3 shows an exemplary robot with movement path in a sketch 100. A robot 120 is connected to a robot controller 122, which is connected to a non shown programmable logic controller. According to the intended movement path the robot 120 will move along a movement path defined by the coordinates 102, 104, 106, 108, 110 which build the movement segments 112, 114, 116 and 118 inbetween them. Each coordinate 102, 104, 106, 108, 110 has to be assumed as at least comprising six coordinate values, three for the coordinates in the XYZ directions and three for the belonging orientation, whereas also configuration data for the robot might be foreseen. Of course it is also possible, to command a robot with less degrees of freedom in movement by a programmable logic controller according to the invention.

### List of reference signs

- 10: exemplary function block of a programmable logic controller (PLC)
- 12: trigger input of first function block
- 14: first output of first function block
- 16: second output of first function block
- 18: third output of first function block
- 20: further inputs of first function block
- 30: exemplary system for commanding a robot by PLC
- 32: second function block
- 34: third function block
- 36: forth function block
- 38: fifth function block
- 40: robot controller interface
- 42: trigger input of second function block
- 44: trigger input of third function block
- 46: trigger input of forth function block
- 48: trigger input of fifth function block
- 50: PLC interface
- 52: first data communication line
- 54: second data communication line
- 56: third data communication line
- 58: forth data communication line
- 62: first output of second function block
- 64: second output of third function block
- 66: third output of forth function block
- 68: fifth data communication line
- 70: first frame part of a robot program
- 72: second frame part of a robot program
- 74: first robot command
- 76: second robot command
- 78: third robot command
- 80: forth robot command
- 82: fifth robot command
- 84: sixth robot command
- 88: control line to robot
- 90: first robot
- 92: programmable logic controller
- 94: first robot controller
- 100: exemplary robot with movement path
- 102: first coordinate of movement path
- 104: second coordinate of movement path
- 106: third coordinate of movement path
- 108: forth coordinate of movement path
- 110: fifth coordinate of movement path
- 112: first movement segment
- 114: second movement segment
- 116: third movement segment
- 118: forth movement segment
- 120: second robot
- 122: second robot controller

## Claims

1. System (30) for commanding a robot (90, 120) by a programmable logic controller (PLC) (92), comprising
- a PLC (92), comprising:
• at least two function blocks (10, 32, 34, 36, 38) with at least one input for triggering (12, 42, 44, 46, 48) an execution of a belonging PLC function and at least one output (14, 16, 18, 62, 64, 66) indicating the status of the belonging function block (10, 32, 34, 36, 38), whereas each function block (10, 32, 34, 36, 38) corresponds to a movement segment (112, 114, 116, 118) of a movement path of the robot (90, 120) to be commanded,
• a robot controller interface (40) which orchestrates the function blocks (10, 32, 34, 36, 38) currently in execution into *robot commands (74, 76, 78, 80, 82, 84),*
- a robot controller (94, 122), which sequentially integrates said orchestrated robot commands into an executable robot program, which is further executed by said robot controller (94, 122),
wherein the function blocks (10, 32, 34, 36, 38) are linked (62-44; 64-46; 66-48) sequentially, so that the execution of a subsequent function block is triggered by the output of the preceding function block, whereas the robot controller interface (40) is prepared to receive a feedback signal of the robot controller (94, 122), which influences the output (14, 16, 18, 62, 64, 66) status of the belonging function block (10, 32, 34, 36, 38) and *wherein the robot controller (94, 122) comprises a motion queue, which is foreseen to store the orchestrated robot commands (74, 76, 78, 80, 82, 84).*

2. System as claimed in claim 1, whereas the at least one output (14, 16, 18, 62, 64, 66) encodes at least three states, namely
• a first state, which indicates, that the function block (10, 32, 34, 36, 38) has been activated,
• a second state, which indicates that the robot (90, 120) has started the corresponding motion
• a third state, which indicates, that the robot (90, 120) has finished the corresponding motion.

3. System as claimed in claim 2, wherein at least one subsequent function block is triggered by the first state of the preceding function block.

4. System as claimed in claim 2 or 3, wherein at least one subsequent function block is triggered by the second state of the preceding function block.

5. System as claimed in one of the claims 2 to 4, wherein at least one subsequent function block is triggered by the third state of the preceding function block.

6. System according to any of the proceeding claims, wherein at least one function block is realized by a belonging software function on a data processing device.

7. System according to claim 6, wherein, the function blocks are implemented on the same hardware of the robot controller than the robot controller software.

8. System according to any of the proceeding claims, wherein at least one function block is realized by a belonging hardware module.

9. System according to *any of the proceeding claims,* wherein the robot controller (94, 122) is foreseen to eliminate those orchestrated robot commands (74, 76, 78, 80, 82, 84) from the motion queue, which have been executed by the robot (90, 120).

10. Method for commanding a robot using a system (30) according to claim 1, the method comprising the following steps:
. Initiating the execution of the first function block (10, 32, 34, 36, 38),
. Orchestrating the robot command assigned to the first function block into the motion queue of the robot controller (94, 122),
. Initiating the execution of subsequent function blocks (34, 36, 38) by an output of the belonging preceding block,
. Orchestrating the robot commands assigned to each subsequent function block into the motion queue of the robot controller (94, 122),
• Executing the commands stored in the motion queue of the robot controller (94, 122),
• Providing status data of the execution of the belonging movement segments (112, 114, 116, 118) to at least the belonging function block (10, 32, 34, 36, 38),
• Updating the output (14, 16, 18, 62, 64, 66) of at least one function block (10, 32, 34, 36, 38) according to the provided status data.

## Patentansprüche

1. System (30) zur Steuerung eines Roboters (90, 120) durch eine programmierbare logische Steuerung (PLC) (92), umfassend:
- eine PLC (92), umfassend
• wenigstens zwei Funktionsblöcke (10, 32, 34, 36, 38) mit wenigstens einem Eingang zur Auslösung (12, 42, 44, 46, 48) einer Ausführung einer zugehörigen PLC-Funktion und wenigstens einem Ausgang (14, 16, 18, 62, 64, 66), der den Zustand des zugehörigen Funktionsblocks (10, 32, 34, 36, 38) angibt, wobei jeder Funktionsblock (10, 32, 34, 36, 38) einem Bewegungssegment (112, 114, 116, 118) eines Bewegungswegs des zu steuernden Roboters (90, 120) entspricht,
• eine Robotersteuerungsschnittstelle (40), die die Funktionsblöcke (10, 32, 34, 36, 38), welche sich gegenwärtig in Ausführung befinden, in Roboterbefehle (74, 76, 78, 80, 82, 84) orchestriert,
- eine Robotersteuerung (94, 122), die die orchestrierten Roboterbefehle der Reihe nach zu einem ausführbaren Roboterprogramm vereinigt, das weiter durch die Robotersteuerung (94, 122) ausgeführt wird,
wobei die Funktionsblöcke (10, 32, 34, 36, 38) sequentiell verbunden sind (62 - 44; 64 - 46; 66 - 48), so dass die Ausführung eines nachfolgenden Funktionsblocks durch den Ausgang des vorhergehenden Funktionsblocks ausgelöst wird,
wobei die Robotersteuerungsschnittstelle (40) bereit ist, ein Rückkopplungssignal der Robotersteuerung (94, 122) zu erhalten, das den Zustand des Ausgangs (14, 16, 18, 62, 64, 66) des zugehörigen Funktionsblocks (10, 32, 34, 36, 38) beeinflusst, und wobei die Robotersteuerung (94, 122) eine Bewegungswarteschlange umfasst, die zur Speicherung der orchestrierten Roboterbefehle (74, 76, 78, 80, 82, 84) vorgesehen ist.

2. System nach Anspruch 1, wobei der wenigstens eine Ausgang (14, 16, 18, 62, 64, 66) wenigstens drei Zustände codiert, nämlich
• einen ersten Zustand, der angibt, dass der Funktionsblock (10, 32, 34, 36, 38) aktiviert wurde,
• einen zweiten Zustand, der angibt, dass der Roboter (90, 120) die entsprechende Bewegung begonnen hat,
• einen dritten Zustand, der angibt, dass der Roboter (90, 120) die entsprechende Bewegung beendet hat.

3. System nach Anspruch 2, wobei wenigstens ein nachfolgender Funktionsblock durch den ersten Zustand des vorhergehenden Funktionsblocks ausgelöst wird.

4. System nach Anspruch 2 oder 3, wobei wenigstens ein nachfolgender Funktionsblock durch den zweiten Zustand des vorhergehenden Funktionsblocks ausgelöst wird.

5. System nach einem der Ansprüche 2 bis 4, wobei wenigstens ein nachfolgender Funktionsblock durch den dritten Zustand des vorhergehenden Funktionsblocks ausgelöst wird.

6. System nach einem der vorhergehenden Ansprüche, wobei wenigstens ein Funktionsblock durch eine zugehörige Softwarefunktion an einer Datenverarbeitungsvorrichtung umgesetzt ist.

7. System nach Anspruch 6, wobei die Funktionsblöcke an der gleichen Hardware der Robotersteuerung wie die Robotersteuerungssoftware umgesetzt sind.

8. System nach einem der vorhergehenden Ansprüche, wobei wenigstens ein Funktionsblock durch ein zugehöriges Hardwaremodul umgesetzt ist.

9. System nach einem der vorhergehenden Ansprüche, wobei die Robotersteuerung (94, 122) dazu vorgesehen ist, die orchestrierten Roboterbefehle (74, 76, 78, 80, 82, 84), die durch den Roboter (90, 120) ausgeführt wurden, aus der Bewegungswarteschlange zu beseitigen.

10. Verfahren zum Steuern eines Roboters unter Verwendung eines Systems (30) nach Anspruch 1, wobei das Verfahren die folgenden Schritte umfasst:
- Beginnen der Ausführung des ersten Funktionsblocks (10, 32, 34, 36, 38),
- Orchestrieren des Roboterbefehls, der dem ersten Funktionsblock zugeordnet ist, in die Bewegungsschlange der Robotersteuerung (94, 122),
- Beginnen der Ausführung nachfolgender Funktionsblöcke (34, 36, 38) durch einen Ausgang des zugehörigen vorhergehenden Blocks,
- Orchestrieren der Roboterbefehle, die jedem nachfolgenden Funktionsblock zugeordnet sind, in die Bewegungswarteschlange der Robotersteuerung (94, 122),
- Ausführen der Befehle, die in der Bewegungswarteschlange der Robotersteuerung (94, 122) gespeichert sind,
- Liefern von Zustandsdaten der Ausführung der zugehörigen Bewegungssegmente (112, 114, 116, 118) an wenigstens den zugehörigen Funktionsblock (10, 32, 34, 36, 38),
- Aktualisieren des Ausgangs (14, 16, 18, 62, 64, 66) wenigstens eines Funktionsblocks (10, 32, 34, 36, 38) gemäß den gelieferten Zustandsdaten.

## Revendications

1. Système (30) pour commander un robot (90, 120) par un contrôleur logique programmable (92), comprenant .
- un contrôleur logique programmable (92) comprenant .
• au moins deux blocs de fonction (10, 32, 34, 36, 38) avec au moins une entrée pour déclencher (12, 42, 44, 46, 48) une exécution d'une fonction de contrôleur logique programmable associée et au moins une sortie (14, 16, 18, 62, 64, 66) indiquant l'état du bloc de fonction associé (10, 32, 34, 36, 38), tandis que chaque bloc de fonction (10, 32, 34, 36, 38) correspond à un segment de mouvement (112, 114, 116, 118) d'un chemin de mouvement du robot (90, 120) à commander,
• une interface de contrôleur de robot (40) qui orchestre les blocs de fonction (10, 32, 34, 36, 38) actuellement en cours d'exécution en commandes de robot (74, 76, 78, 80, 82, 84),
- un contrôleur de robot (94, 122), qui intègre séquentiellement lesdites commandes de robot en un programme de robot exécutable qui est exécuté en outre par ledit contrôleur de robot (94, 122),
dans lequel les blocs de fonction (10, 32, 34, 36, 38) sont liés (62-44 ; 64-46 ; 66-48) séquentiellement, de manière à ce que l'exécution d'un bloc de fonction suivant soit déclenchée par la sortie du bloc de fonction précédent,
tandis que l'interface du contrôleur de robot (40) est préparée à recevoir un signal de rétroaction du contrôleur de robot (94, 122), qui influence l'état de la sortie (14, 16, 18, 62, 64, 66) du bloc de fonction associée (10, 32, 34, 36, 38) et
dans lequel le contrôleur du robot (94, 122) comprend une queue de mouvement, qui est prévue pour stocker les commandes orchestrées du robot (74, 76, 78, 80, 82, 84).

2. Système selon la revendication 1, alors que l'au moins une sortie (14, 16, 18, 62, 64, 66) code au moins trois états, à savoir
• un premier état, qui indique que le bloc de fonction (10, 32, 34, 36, 38) a été activé,
• un deuxième état qui indique que le robot (90, 120) a commencé le mouvement correspondant,
un troisième état qui indique que le robot (90, 120) a fini le mouvement correspondant.

3. Système selon la revendication 2, dans lequel au moins un bloc de fonction suivant est déclenché par le premier état du bloc de fonction précédent.

4. Système selon la revendication 2 ou 3, dans lequel au moins un bloc de fonction suivant est déclenché par le deuxième état du bloc de fonction précédent.

5. Système selon une des revendications 2 à 4, dans lequel au moins un bloc de fonction suivant est déclenché par le troisième état du bloc de fonction précédent.

6. Système selon l'une quelconque des revendications précédentes, dans lequel au moins un bloc de fonction est réalisé par une fonction logicielle associée sur un dispositif de traitement de données.

7. Système selon la revendication 6, dans lequel les blocs de fonction sont mis en oeuvre sur le même matériel du contrôleur du robot que le logiciel du contrôleur du robot.

8. Système selon l'une quelconque des revendications précédentes, dans lequel au moins un bloc de fonction est réalisé par un module matériel associé.

9. Système selon l'une quelconque des revendications précédentes, dans lequel le contrôleur de robot (94, 122) est prévu pour éliminer ces commandes de robot orchestrées (74, 76, 78, 80, 82, 84) de la queue de mouvements, qui ont été exécutées par le robot (90, 120).

10. Procédé pour commander un robot en utilisant un système (30) selon la revendication 1, ce procédé comprenant les étapes suivantes .
• le lancement de l'exécution du premier bloc de fonction (10, 32, 34, 36, 38),
• l'orchestration de la commande du robot attribuée au premier bloc de fonction dans la queue de mouvements du contrôleur du robot (94, 122),
• le lancement de l'exécution des blocs de fonction suivants (34, 36, 38) par une sortie du bloc précédent associé,
• l'orchestration des commandes du robot attribuées à chaque bloc de fonction suivant dans la queue de mouvements du contrôleur du robot (94, 122),
• l'exécution des commandes stockées dans la queue de mouvements du contrôleur du robot (94, 122),
• la fourniture des données d'état de l'exécution des segments de mouvement associés (112, 114, 116, 118) à au moins le bloc de fonction associé (10, 32, 34, 36, 38),
• la mise à jour de la sortie (14, 16, 18, 62, 64, 66) d'au moins un bloc de fonction (10, 32, 34, 36, 38) selon les données d'état fournies.
